# EUROPÄISCHE PATENTSCHRIFT

(11) **EP 3 804 948 B1**
(45) Veröffentlichungstag und Bekanntmachung des Hinweises auf die Patenterteilung: **02.11.2022**
(21) Anmeldenummer: 20194219.0
(22) Anmeldetag: 03.09.2020
(51) Int. Cl.: B29C 45/17, B29C 45/26, B29C 33/44, B29C 45/44, B65D 41/04, B65D 41/26

(54) **VERFAHREN ZUR HERSTELLUNG VON EINEM DOSIERVERSCHLUSS**
METHOD FOR THE PRODUCTION OF A DOSING CAP
PROCÉDÉ DE FABRICATION D'UNE FERMETURE DE DOSAGE

(30) Priorität: 07.10.2019 DE 102019215330
(43) Veröffentlichungstag der Anmeldung: 14.04.2021
(73) Patentinhaber: Henkel AG & Co. KGaA, 40589 Düsseldorf (DE)
(72) Erfinder: Henning, Ingomar, 51588 Nümbrecht (DE); Bertram, Carsten, 40223 Düsseldorf (DE); Oberdorf, Dirk, 58285 Gevelsberg (DE); Borger, Dannielle Paola, 6075 ED Herkenboosch (NL); Fileccia, Salvatore, 46049 Oberhausen (DE); Daube, Marcel, 40593 Düsseldorf (DE)

(56) Entgegenhaltungen:
- EP-A1- 1 114 780
- EP-A1- 2 735 426
- WO-A1-2014/088500
- WO-A1-2018/177867
- US-A- 4 566 508
- US-A- 4 909 404
- US-A- 5 076 453
- US-A1- 2013 175 734

## Beschreibung

Die vorliegende Erfindung betrifft ein Verfahren zur Herstellung von einem ersten Dosierverschluss aus einem ersten Kunststoffmaterial, wobei das Verfahren auf einem Verfahren zur Herstellung eines zweiten Dosierverschlusses aus einem zweiten Kunststoffmaterial basiert, das sich vom ersten Kunststoffmaterial unterscheidet.

Beispielsweise ist aus der DE 10 2016 223 046 A1 ein Dosierverschluss bekannt, der einen Dosierbecher mit einem Boden und einer Seitenwand sowie eine Schürze aufweist, die außen an der Seitenwand ansetzt und mit der Seitenwand einen umlaufenden Ringraum mit einem darin befindlichen Innengewinde begrenzt. Das Innengewinde dient dazu, den Dosierverschluss auf einen mit einem Außengewinde versehenen Flaschenhals einer ebenfalls aus Kunststoff hergestellten Waschmittelflasche aufzuschrauben. Durch den Dosierverschluss lässt sich die Waschmittelflasche nicht nur verschließen, sondern es ist auch möglich, mittels des Dosierbechers eine bestimmte Menge aus der Waschmittelflasche genau abzumessen. Zur Abdichtung zwischen Flaschenhals und Dosierverschluss ist in der DE 10 2016 223 046 A1 ein separates Dichtungselement vorgesehen. Die vorliegende Erfindung bezieht sich aber auch auf Dosierverschlüsse, die kein gesondertes Dichtungselement aufweisen (sogenannte Einkomponenten-Dosierverschlüsse).

Der aus dem Stand der Technik bekannte Dosierverschluss ist aus reinem oder neuem Kunststoff, also einem Kunststoff, der nicht und auch nicht teilweise aus recyceltem Kunststoffmaterial besteht. Der Dosierverschluss wird dabei in einer Spritzgussform in einem Spritzgussverfahren hergestellt. Die Begriffe "erstes Kunststoffmaterial" und "zweites Kunststoffmaterial" sind hier so zu verstehen, dass die Kunststoffe unterschiedliche Eigenschaften aufweisen, die Einfluss auf den Spritzgussprozess und das hergestellte Spritzgussteil haben. Dokument WO 2018/177867 zeigt die Geometrie einer Kappe mit Schürze sowie ein Werkzeug mit einem zweiteiligen Kern, bestehend aus einem Innenteil und einem hülsenartigen Außenteil. Den weiteren Stand der Technik bilden die US 4 566 508, EP 2 735 426, WO 2018/177867, US 2013/175734, US 5 076 453, US 4 909 404 und WO 2014/088500.

Aufgrund der öffentlichen Diskussion über Kunststoffmüll, Kunststoffteppiche im Meer, Tiere, die an Kunststoff ersticken, sowie Mikroplastik in Gewässern nimmt der Druck auf die Hersteller von Kunststoffverpackungen immer mehr zu. Es wird zunehmend auch politischer Druck ausgeübt, und es gibt Erwägungen seitens der Gesetzesgeber, Verpackungen mit Strafgebühren (Steuern) zu belegen, welche einen geforderten Mindestanteil an Rezyklat nicht erfüllen. Das Rezyklat ist dabei ein Kunststoff, der aus Kunststoffabfall beim Endverbraucher (post-consumer) oder beim Handel/Industrie (post-industrial) recycelt wurde.

Der Einsatz von Rezyklat im Spritzgussverfahren ist allseits bekannt. Das Rezyklat kann bei bekannter Herkunft, konstanter Qualität mit entsprechender Reinheit sehr effektiv auch bei komplexen Spritzgussteilen ohne große Effizienz- und Qualitätsverlust im Vergleich zu reinem/neuem Kunststoff eingesetzt werden.

Aus dem Bereich der Endverbraucher (post consumer) - wie beispielsweise aus der Sammlung durch das duale Kreislaufsystem "Der Grüne Punkt" - weist das Rezyklat eine geringfügigere Reinheit bzw. Konstanz schon allein aufgrund der Art der eingesammelten Kunststoffverpackungen, Verpackungssysteme, Behälter, Kunststofftragetaschen, Folienumverpackungen etc. auf. Selbst wenn alle eingesammelten Verpackungen nur aus einem gleichen Kunststoff wie beispielsweise Polypropylen (PP) wären, würden die unterschiedlichen Verpackungen unterschiedliche Farben und Fließindizes sowie diverse Verunreinigungen einbringen. Trotz aufwändiger Trennung und einer anschließenden aufwändigen Aufarbeitung und Homogenisierung (Mischung von Chargen) würde jede Charge andere Materialeigenschaften aufweisen.

Schwankende Materialqualität und Verarbeitungseigenschaften haben in der Vergangenheit dazu geführt, dass für Rezyklate nur wenige Verpackungsprojekte im Spritzgussverfahren umgesetzt wurden. Der Grund liegt hierfür auf der Hand: Spritzgussteile sind immer ökonomisch optimiert, d.h., es wird versucht, mit dem geringsten Materialeinsatz (geringe Wandstärke) die an das jeweilige Spritzgussteil gestellten Anforderungen zu erfüllen. Spritzgussteile werden somit auf ein ganz bestimmtes Material ausgelegt und jede Änderung in den Materialeigenschaften kann zu einem Versagen der Funktion und/oder zu einem suboptimalen Spritzgussprozess (höhere Zykluszeit, schlechtere Entformung, Deformierung etc.) führen.

Der Einsatz von post-consumer Rezyklat erfordert aufgrund schwankender Materialeigenschaften eine Entwicklung entgegen des allgemeinen Trends, möglichst wenig Material bei möglichst geringen Herstellkosten einzusetzen. Die Gründe dafür sind:
- Werkzeugtechnik: Investitionen in neue Spritzgussformen sind notwendig, da andere Formteilgeometrien und/oder größere Wandstärken zur Erfüllung der gestellten Anforderungen an das Spritzgussteil notwendig sind;
- Größere Wandstärken bedingen längere Zykluszeiten, was eine geringere Produktionskapazität zur Folge hat;
- Größere Wandstärken benötigen mehr Materialeinsatz; und
- Mehr Materialeinsatz bedeutet einen höheren Energieeinsatz mit dem damit einhergehenden größeren Verbrauch von Umweltressourcen.

Daraus lässt sich zusammenfassend ableiten, dass ein Einsatz von Rezyklat, zumindest wenn es auf Kunststoffabfall aus dem Endverbraucherbereich basiert, grundsätzlich eine Investition in die Werkzeugtechnik bedingt und den Materialeinsatz erhöht. Zwar lässt sich durch den Einsatz des Rezyklats der Verbrauch von neuem oder reinem Kunststoff und somit der Verbrauch von Umweltressourcen, die mit der Herstellung des reinen Kunststoffes einhergehen, reduzieren, doch steht dem ein erhöhter Verbrauch anderer Umweltressourcen wie ein erhöhter Energieverbrauch bei der Herstellung des Spritzgussteils entgegen. Der Einsatz des Rezyklats führt also nicht uneingeschränkt zu einer besseren Nachhaltigkeitsbewertung.

Die oben beschriebenen Zusammenhänge bei der Herstellung eines Spritzgussteiles aus einem reinen Kunststoff einerseits und aus einem Rezyklat andererseits ergeben sich grundsätzlich auch bei Verwendung eines höherwertigeren Kunststoffs im Vergleich zu einer Verwendung eines minderwertigeren Kunststoffs. Das erste Kunststoffmaterial soll somit allgemein gesprochen Eigenschaften aufweisen, die bei der Dimensionierung und Herstellung eines Dosierverschlusses eher zu Problemen führen als das zweite Kunststoffmaterial.

Der Erfindung liegt daher die Aufgabe zu Grunde, ein Verfahren zur Herstellung eines Dosierverschlusses mit einem ersten, eher minderwertigeren Kunststoffmaterial bereitzustellen, was mit niedrigen Kosten und geringem Verbrauch an Umweltressourcen verbunden ist.

Die der Erfindung zu Grunde liegende Aufgabe wird mit der Merkmalskombination gemäß Anspruch 1 gelöst. Ausführungsbeispiele der Erfindung können den Unteransprüchen zu Anspruch 1 entnommen werden.

Erfindungsgemäß ist vorgesehen, dass für die Herstellung des ersten Dosierverschlusses die Spritzgussform des zweiten Dosierverschlusses verwendet wird, so dass der erste Dosierverschluss und der zweite Dosierverschluss eine identische Form aufweisen. Die Spritzgussform weist dabei einen Auswerferstempel auf, der an dem Boden des Dosierbechers anliegt und beim Auswerfen des Dosierverschluss aus der Spritzgussform gegen diesen Boden drückt. Die Anlage des Auswerferstempels an dem Boden des Dosierbechers bezieht sich dabei auf den Zeitpunkt der Herstellung des Dosierverschlusses, bei dem sich der spritzgegossene Dosierverschluss noch in der Spritzgussform befindet.

In einem Ausführungsbeispiel ist der erste Dosierverschluss (im Folgenden: Dosierverschluss) im Wesentlichen rotationssymmetrisch zu einer Mittelachse ausgebildet. Vorzugsweise erfolgt das Auswerfen des Dosierverschlusses parallel zu der Mittelachse, also in einer axialen Richtung des Dosierverschlusses.

Es hat sich überraschenderweise gezeigt, dass unter Zugrundelegung eines Dosierverschlusses, der in einer Spritzgussform hergestellt wird, die zum Zwecke einer günstigen Entformung eines Dosierverschlusses aus dem zweiten bzw. höherwertigeren Kunststoff optimiert worden ist, sich mit dieser Spritzgussform ein Dosierverschluss aus dem ersten oder minderwertigeren Kunststoff herstellen lässt, wobei der Dosierverschluss aus dem minderwertigeren Kunststoff eine gleiche Formteilgeometrie und gleiche Funktionsmaße aufweist. Somit ist es möglich, den höherwertigeren Kunststoff durch den minderwertigeren Kunststoff zu ersetzen, ohne dass dabei Werkzeugkosten für eine neue Spritzgussform anfallen und ohne dass zum Erfüllen der gestellten Anforderungen an den Dosierverschluss Wandstärken oder andere Formmaße geändert werden müssen. Die optimierte Spritzgussform, bei der der Auswerferstempel maßgeblich das Auswerfen des Spritzgussteils positiv beeinflusst und die mit dem Auswerfen des Spritzgussteils verbundenen Probleme wie die Entformung löst, ermöglicht einen universellen Einsatz der Spritzgussform für Kunststoffe, deren Eigenschaften zwischen den Eigenschaften des höherwertigeren Kunststoffs und den Eigenschaften des minderwertigeren Kunststoffs liegen.

Die Erfindung hat sich zu Nutze gemacht, dass bei der Auslegung oder Dimensionierung des Dosierverschlusses die eingesetzte Werkzeugtechnologie (also die Spritzgussform) maßgeblich die erforderliche Formteilgeometrie und erforderlichen Funktionsmaße bestimmt. Andere Vorgaben an den Dosierverschluss, wie beispielsweise das Bestehen eines Falltests aus einer bestimmten Höhe oder die Überprüfung der sicheren Abdichtung des auf die Waschmittelflasche aufgeschraubten Dosierverschlusses, haben sich dabei als weniger kritisch erwiesen. Durch die neue Werkzeugtechnologie mit den damit einhergehenden geringeren Anforderungen lassen sich somit Dosierverschlüsse auch mit minderwertigerem Kunststoff herstellen. Die Anforderungen, die sich neben der Entformung bzw. neben den Anforderungen ergeben, die mit dem Auswerfen aus der Spritzgussform verbunden sind, werden dabei auch ohne weiteres von dem minderwertigeren Kunststoff erfüllt.

Die Spritzgussform kann eine Auswerferbrille aufweisen, die an einer Außenkante der Schürze anliegt und beim Auswerfen gegen die Außenkante drückt. Eine Auswerfrichtung und eine Auswerfgeschwindigkeit der Auswerferbrille kann, zumindest für eine gewisse Zeit, der Auswerfrichtung und Auswerfgeschwindigkeit des Auswerferstempels entsprechen. Somit drücken Auswerferbrille und Auswerferstempel gemeinsam gegen das Spritzgussteil, um dieses aus der Spritzgussform zu entfernen. Aus dem Stand der Technik ist eine Spritzgussform bekannt, bei der lediglich die Auswerferbrille beim Auswerfen gegen den Dosierverschluss drückt, was aber zu hohen Kräften und Spannungen in dem auszuwerfenden Spritzgussteil führt. Durch das gemeinsame Auswerfen von Auswerferbrille und Auswerferstempel lassen sich diese Kräfte und Spannungen auf ein sehr niedriges Niveau reduzieren, so dass auch ein Dosierverschluss mit Kunststoff mit schwankenden, nicht optimal für diese Werkzeuganwendung ausgelegtem Eigenschaftsprofil - zum Beispiel ein Kunststoff mit einer geringeren Steifigkeit - dieses Auswerfen ohne Beschädigung oder Deformation übersteht.

Vorzugsweise wird das Innengewinde vom formgebenden Außengewinde der Spritzgussform zwangsentformt. Die Schürze wird dabei so weit verformt, dass das Innengewinde beim Auswerfen über das formgebende Außengewinde in axialer Richtung rutscht.

Die Spritzgussform kann Mittel aufweisen, durch die das Innengewinde des Dosierverschlusses von einem formgebenden Außengewinde der Spritzgussform abgeschraubt wird. Im Gegensatz zum oben beschriebenen Ausführungsbeispiel, bei dem das Innengewinde zum vorgegebenen Außengewinde der Spritzgussform zwangsentformt wird, wird das Innengewinde vom formgebenden Außengewinde praktisch ohne Verformung gelöst. Die Auswerfgeschwindigkeit des Auswerferstempels kann dabei, zumindest zeitweise, auf die axiale Relativbewegung abgestimmt sein, die sich durch das Abdrehen des Innengewindes des Dosierverschlusses von dem formgebenden Außengewinde in axialer Richtung des Innengewindes bzw. des Außengewindes ergibt.

In einem Ausführungsbeispiel drückt der Auswerferstempel gegen den gesamten Boden des Dosierbechers. Somit bildet der Auswerferstempel vollständig die Fläche eines Formhohlraums, durch die eine Innenseite des Bodens des Dosierbechers geformt wird. Aufgrund der vergleichsweise großen Anlagefläche des Auswerferstempels lassen sich große Kräfte auf den Dosierverschluss übertragen.

Zur Ausbildung der Innenseite des Dosierbechers kann ein Innenkern vorgesehen ist, wobei beim Auswerfen des Dosierverschlusses der Auswerferstempel relativ zum Innenkern bewegt wird. Die Innenseite des Dosierbechers, die die Innenseite des Bodens des Dosierbechers umfasst, wird somit durch eine wenigstens zweiteilige Bauteilgruppe geformt.

In einem Ausführungsbeispiel weist der Innenkern einen Hinterschnitt auf, der zu einem kegelstumpfförmigen Abschnitt der Seitenwand des Dosierbechers führt. Bedingt durch den Hinterschnitt muss sich die Seitenwand beim Auswerfen des Spritzgussteils ausweiten.

Der Auswerferstempel kann einen Stempelschaft und eine endseitige Stempelplatte aufweisen, deren Fläche größer ist als die Fläche eines äußeren Querschnitts des Stempelschafts. Insgesamt weist der Auswerferstempel somit die Form eines Pilzes auf, wobei die endseitige Stempelplatte den Kopf des Pilzes bildet.

Das erste Kunststoffmaterial kann zumindest anteilig ein Rezyklat aus Sammlungen von Kunststoffabfällen beim Endverbraucher sein (post consumer) umfassen. Es ist möglich, dass das erste Kunststoffmaterial ein Rezyklat enthält, das alternativ oder zusätzlich aus Industriekunststoffabfällen (post industrial) besteht.

Der Anteil des Rezyklats am ersten Kunststoffmaterial kann 1 bis 100 % betragen.

Das erste Kunststoffmaterial kann eine höhere Schlagzähigkeit aufweisen als das zweite Kunststoffmaterial. Alternativ oder zusätzlich kann das erste Kunststoffmaterial eine geringere Zugfestigkeit als das zweite Kunststoffmaterial aufweisen.

In einem Ausführungsbeispiel weist das erste Kunststoffmaterial bzw. der erste Kunststoff eine Zugfestigkeit in einem Bereich von 900 bis 1300 MPa auf (DIN EN ISO 527, 1 mm/min). Zudem kann die Schlagzähigkeit des ersten Kunststoffs zwischen 6 und 7 KJ/m² (Charpy Schlagzähigkeit DIN EN ISO 179, 23°C) betragen.

In einem Ausführungsbeispiel stellt Polypropylen das zweite Kunststoffmaterial dar, während das erste Kunststoffmaterial ein Polyethylen hoher Dichte ist.

Anhand eines in der Zeichnung dargestellten Ausführungsbeispiels wird die Erfindung näher erläutert. Es zeigen:
- Figur 1: einen Dosierverschluss; und
- Figur 2: eine Spritzgussform, mit der sich der Dosierverschluss der Figur 1 herstellen lässt.

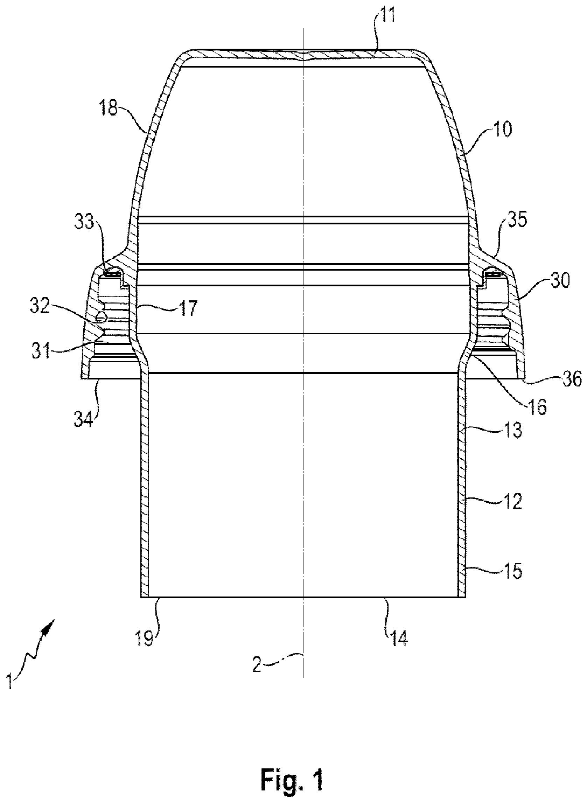

Figur 1 zeigt einen Dosierverschluss, der in seiner Gesamtheit mit 1 bezeichnet wird. Das erfindungsgemäße Verfahren dient zur Herstellung dieses Dosierverschlusses 1. Der Dosierverschluss 1 weist einen Dosierbecher 10 mit einem Boden 11 und einer im Wesentlichen zylindrischen Seitenwand 12 auf. Der Dosierverschluss 1 ist zu einer Mittelachse 2 rotationssymmetrisch ausgebildet. An einer Außenseite 13 der Seitenwand 12 ist eine Schürze 30 vorgesehen die mit der Seitenwand 12 einen umlaufenden Ringraum 31 begrenzt. Der Ringraum 31 weist ein offenes axiales Ende 34 und ein geschlossenes axiales Ende 35 auf.

In dem umlaufenden Ringraum 31 befindet sich ein Innengewinde 32, das dazu dient, mit einem Außengewinde einer Waschmittelflasche oder Spülmittelflasche zusammen zu wirken. Das Außengewinde ist dabei an einen Flaschenhals angeformt, dessen oberer Bereich in den umlaufenden Ringraum 31 hineinragt, wenn der Dosierverschluss 1 auf die Waschmittelflasche aufgeschraubt ist. In diesem aufgeschraubten Zustand liegt eine obere Kante des Flaschenhalses der Waschmittelflasche an einer Dichtung 33 an, die in dem umlaufenden Ringraum 31 an dessen geschlossenem Ende 35 angeordnet ist. Die Dichtung 33 kann dabei sowohl einer axiale Anlagefläche als auch eine radiale Anlagefläche für die obere Kante des Flaschenhalses bilden. Die Dichtung 33 besteht vorzugsweise aus einem für Dichtzwecke geeignetem Kunststoff (zum Beispiel ein thermoplastisches Elastomer) und kann vor dem Spritzgießen in die Spritzgussform eingelegt werden. Es ist auch möglich, nach erfolgtem Spritzguss von Dosierbecher 10 und Schürze 30 die Dichtung in den umlaufenden Ringraum 31 einzulegen. Anstatt eines Zweikomponenten-Dosierverschlusses wie hier exemplarisch dargestellt, also anstatt eines Verschlusses, bei dem sich die Dichtung 33 hinsichtlich des Materials von dem Dosierbecher 10 und der Schürze 30 unterscheidet, kann das Verfahren auch auf konventionelle Einkomponenten-Dosierverschlüsse angewendet werden, bei denen kein gesondertes Dichtungsmaterial angespritzt oder eingelegt wird.

Wenn der Dosierverschluss 1 von der Waschmittelflasche abgeschraubt ist und mit einem offenen Ende 14 des Dosierbechers 10 nach oben ausgerichtet ist, lässt sich in den Dosierbecher 10 eine gewisse Menge des Inhalts aus der Waschmittelflasche gießen. Der Dosierbecher 10 kann Markierungen aufweisen, die einen gewissen Füllstand in einer Volumeneinheit (zum Beispiel ml) anzeigen.

Die Seitenwand 12 des Dosierbechers 10 weist einen ersten zylindrischen Abschnitt 15 auf, der sich von dem offenen Ende 14 bis zu einem kegelstumpfförmigen Abschnitt 16 erstreckt. Der Abschnitt 16 liegt dabei auf der Höhe des ringförmigen Innenraums 31. Dem kegelstumpfförmigen Abschnitt 16 schließt sich, in Richtung des Bodens 11 gesehen, ein zweiter, überwiegend zylindrischer Abschnitt 17 an. Diesem folgt ein kuppelförmiger Abschnitt 18, der bis zu dem in etwa ebenen Boden 11 erreicht. Ein Außendurchmesser des ersten zylindrischen Abschnitts 15 ist dabei kleiner als ein Außendurchmesser des zweiten zylindrischen Abschnitts 17. in einem Ausführungsbeispiel beträgt der Außendurchmesser des ersten zylindrischen Abschnitts 35 bis 45 mm. Der Außendurchmesser des zweiten zylindrischen Abschnitts 17 kann 3 bis 20 % größer sein als der Außendurchmesser des ersten zylindrischen Abschnitts 15. Eine Höhe des Dosierverschlusses beträgt vorzugsweise 65 bis 75 mm (Abstand von Boden 11 und offenem Ende 14). Eine durchschnittliche Wandstärke der Seitenwand 12 und des Bodens 11 beträgt 0,9 bis 1,1 mm. Ein Maximalvolumen, welches von dem Dosierbecher 10 aufgenommen werden kann, kann - auch unabhängig von der hier beschriebenen besonderen Formgebung der Seitenwand mit den diversen Abschnitten - in einem Bereich von 50 bis 200 ml liegen. Ein bevorzugter Wert für das Maximalvolumen (dann ist der Dosierbecher bis zu einer das offene Ende 14 umgebenden ringförmigen Kante 18 vollständig gefüllt) liegt zwischen 70 und 80 ml.

Der Dosierverschluss 1 kann aus reinem Polypropylen sein. Es ist aber gemäß der Erfindung auch möglich dass dieser Dosierverschluss aus einem Rezyklat von Polypropylenfraktionen ist. Dabei kann es sich um eine Mischung handeln aus recyceltem Polypropylen (Rezyklat) und reinem/neuem Polypropylen. Der Anteil des Rezyklats an der Gesamtmasse des Dosierverschlusses 1 kann 1 bis 100 % betragen.

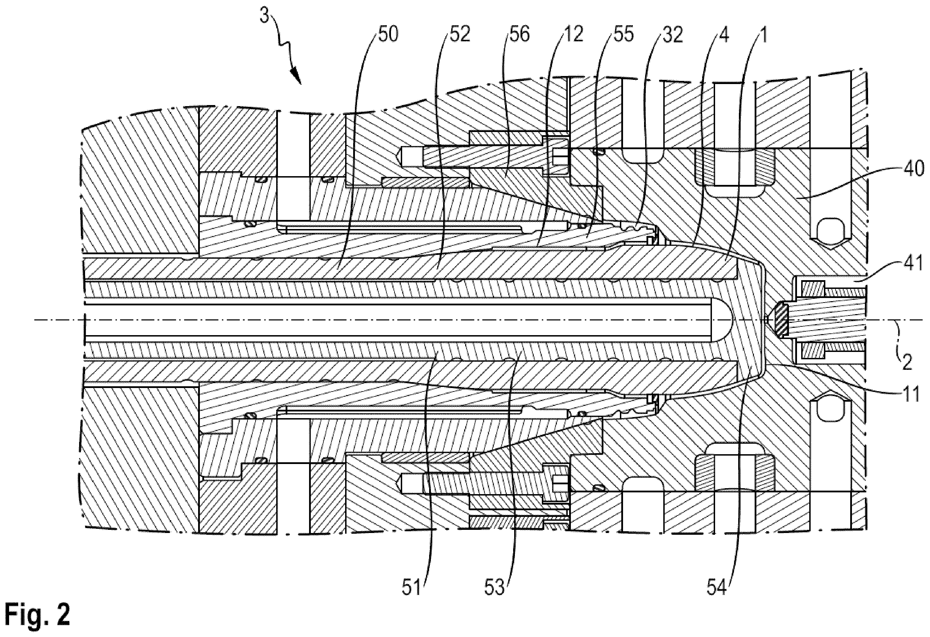

In Figur 2 ist eine mit 3 bezeichnete Spritzgussform dargestellt, die eine erste Spritzgussformhälfte 40 und eine zweite, mehrteilig ausgebildete Spritzgussformhälfte 50 aufweist. Durch die Spritzgussformhälften 40, 50 wird ein Formhohlraum 4 definiert, der beim Spritzgießen mit Kunststoff aus einer Kunststoffzuführung 41 gefüllt wird. Der mit dem Kunststoff gefüllte Formhohlraum 4 entspricht dem gegossenen Spritzgussteil bzw. dem in Figur 1 dargestellten Dosierverschluss 1.

Die zweite oder in der Darstellung der Figur 2 linke Spritzgussformhälfte 50 weist einen Auswerferstempel 51 und einen Innenkern 52 auf. Der Auswerferstempel 51 und der Innenkern 52 sind koaxial zu der Mittelachse 2 angeordnet. Der Auswerferstempel 51 umfasst einen Stempelschaft 53 und eine endseitige Stempelplatte 54, die an dem Boden 11 des Dosierverschlusses 1 anliegt. Zusammen mit der Stempelplatte 54 formt der Innenkern 52 die Innenseite des Dosierverschlusses 1 aus.

Des Weiteren ist ein äußeres, hülsenförmiges Formteil 55 vorgesehen, wodurch die Form der Außenseite 13 der Seitenwand 12 und auch die Form des umlaufenden Ringraums 31 vorgegeben wird.

Nachdem der erwärmte und flüssige Kunststoff in den Formholraum 4 eingespritzt worden ist und der Kunststoff danach genügend fest geworden ist, bewegt sich die erste Formhälfte 40 in axialer Richtung (entlang der Mittelachse 2) nach rechts, so dass die Außenseite des Spritzgussteils 1 bis zu einer äußeren Kante 36 (siehe auch Figur 1) der Schürze 30 freigelegt ist. Zum nun stattfindenden Auswerfen des Dosierverschlusses 1 drückt in axialer Richtung der Auswerferstempel 51 gegen den Boden 11 des Dosierverschlusses 1. Unterstützt wird der Auswerferstempel 51 durch eine Auswerferbrille 56, die an der äußeren Kante 36 der Schürze 30 angreift. Während in diesem ersten Schritt des Auswerfens das äußere Formteil 55 axial fest steht, bewegt sich gemeinsam mit dem Auswerferstempel 51 und der Auswerferbrille 56 der Innenkern 52 im gleichen Maße nach rechts. Somit wird in diesem ersten Schritt nur das Innengewinde 32 entformt, wobei sich die Schürze 30 radial nach außen verformen muss, damit das Innengewinde 32 axial über das äußere Formteil 55 mit dem daran angeformten formgebenden Außengewinde rutschen kann.

In einem zweiten Schritt des Auswerfens steht nun der Innenkern 52 fest, während sich der Auswerferstempel 51 und die Auswerferbrille 56 weiter nach rechts bewegen. Durch die Relativbewegung zwischen Auswerferstempel 51 und Innenkern 52 wird nun auch die Innenseite der Seitenwand 10 des Dosierverschlusses 1 entformt. Dabei muss sich der erste zylindrische Abschnitt 15 und der kegelstumpfförmige Abschnitt 16 der Seitenwand 12 radial nach außen ausweiten, damit die Seitenwand 12 an dem Innenkern 52 vorbei gleiten kann.

Durch das Zusammenwirken von Auswerferstempel 51 und Auswerferbrille 56 beim Auswerfen lassen sich die in dem Spritzgussteil bzw. in dem Dosierverschluss 1 verursachten Kräfte oder Spannungen soweit reduzieren, dass ein (minderwertigerer) Kunststoff verwendet werden kann, der eine geringere Zugfestigkeit aufweist als der Kunststoff, der bei der Optimierung des Dosierverschlusses 1 und der Spritzgussform 3 zu Grunde gelegt worden ist. Dies eröffnet die Möglichkeit, mit der gleichen Werkzeugtechnologie identische Dosierverschlüsse 1 herzustellen, die aber aus unterschiedlichen Kunststoffen geformt sind.

### Bezugszeichenliste

- 1: Dosierverschluss (erster Dosierverschluss)
- 2: Mittelachse
- 3: Spritzgussform
- 4: Formhohlraum
- 10: Dosierbecher
- 11: Boden
- 12: Seitenwand
- 13: Außenseite
- 14: offenes Ende
- 15: erster zylindrischer Abschnitt
- 16: kegelstumpfförmiger Abschnitt
- 17: zweiter zylindrischer Abschnitt
- 18: kuppelförmiger Abschnitt
- 19: Kante
- 30: Schürze
- 31: Ringraum
- 32: Innengewinde
- 33: Dichtung
- 34: offenes Ende
- 35: geschlossenes Ende
- 36: äußere Kante
- 40: erste Spritzgussformhälfte
- 41: Kunststoffzuführung
- 50: zweite Spritzgussform Hälfte
- 51: Auswerferstempel
- 52: Innenkern
- 53: Stempelschaft
- 54: Stempelplatte
- 55: äußeres Formteil
- 56: Auswerferbrille

## Patentansprüche

1. Verfahren zur Herstellung von einem ersten Dosierverschluss (1) aus einem ersten Kunststoffmaterial, wobei das Verfahren auf einem Verfahren zur Herstellung eines zweiten Dosierverschlusses aus einem zweiten Kunststoffmaterial basiert, das sich von dem ersten Kunststoffmaterial unterscheidet, wobei der erste Dosierverschluss (1) und der zweite Dosierverschluss jeweils einen Dosierbecher (10) mit einem Boden (11) und einer Seitenwand (12) sowie eine Schürze (30) aufweist, die außen an der Seitenwand (12) ansetzt und mit der Seitenwand (12) einen umlaufenden Ringraum (31) mit einem darin befindlichen Innengewinde (32) begrenzt, und wobei der erste Dosierverschluss (1) und der zweite Dosierverschluss jeweils in einer Spitzgussform (3) im Spritzgussverfahren hergestellt werden, **dadurch gekennzeichnet, dass** für die Herstellung des ersten Dosierverschlusses (1) die Spritzgussform (3) des zweiten Dosierverschlusses verwendet wird, sodass der erste Dosierverschluss (1) und der zweite Dosierverschluss eine identische Form aufweisen, wobei die Spritzgussform (3) einen Auswerferstempel (51) aufweist, der an dem Boden (11) des Dosierbechers (10) anliegt und beim Auswerfen des Dosierverschlusses (1) aus der Spritzgussform (3) gegen diesen Boden (11) drückt sowie eine Auswerferbrille (56) aufweist, die an einer Außenkante (36) der Schürze (30) anliegt und beim Auswerfen gegen die Außenkante (36) drückt.

2. Verfahren nach Anspruch 1, **dadurch gekennzeichnet, dass** eine Auswerfrichtung und eine Auswerfgeschwindigkeit der Auswerferbrille (56) einer Auswerfrichtung und einer Auswerfgeschwindigkeit des Auswerferstempels (51) entsprechen.

3. Verfahren nach einem der Ansprüche 1 bis 2, **dadurch gekennzeichnet, dass** die Spritzgussform (3) Mittel aufweist, durch die das Innengewinde (32) des Dosierverschlusses (1) von einem formgebenden Außengewinde der Spritzgussform abgeschraubt wird.

4. Verfahren nach einem der Ansprüche 1 bis 3, **dadurch gekennzeichnet, dass** der Auswerferstempel (51) gegen den gesamten Boden (11) des Dosierbechers (10) drückt.

5. Verfahren nach einem der Ansprüche 1 bis 4, **dadurch gekennzeichnet, dass** zur Ausbildung einer Innenseite des Dosierbechers (10) ein Innenkern (52) vorgesehen ist, wobei beim Auswerfen des Dosierverschlusses (1) der Auswerferstempel (51) relativ zum Innenkern (52) bewegt wird.

6. Verfahren nach Anspruch 5, **dadurch gekennzeichnet, dass** der Innenkern (52) einen Hinterschnitt aufweist, der zu einem kegelstumpfförmigen Abschnitt (16) der Seitenwand (12) des Dosierbechers (10) führt.

7. Verfahren nach Anspruch 5 oder 6, **dadurch gekennzeichnet, dass** der Auswerfstempel (51) einen Stempelschaft (53) und eine endseitige Stempelplatte (54) aufweist, deren Fläche größer ist als die Fläche eines äußeren Querschnitts des Stempelschafts (53).

8. Verfahren nach einem der Ansprüche 1 bis 7, **dadurch gekennzeichnet, dass** das erste Kunststoffmaterial zumindest anteilig ein Rezyklat aus Kunststoffsammlungen beim Endverbraucher ist.

9. Verfahren nach Anspruch 8, **dadurch gekennzeichnet, dass** das erste Kunststoffmaterial zumindest anteilig ein Rezyklat aus Kunststoffsammlungen beim Endverbraucher und aus Industrieabfällen ist.

10. Verfahren nach einem der Ansprüche 1 bis 9, **dadurch gekennzeichnet, dass** das erste Kunststoffmaterial eine höhere Schlagzähigkeit als das zweite Kunststoffmaterial aufweist.

11. Verfahren nach einem der Ansprüche 1 bis 10, **dadurch gekennzeichnet, dass** das erste Kunststoffmaterial eine geringere Zugfestigkeit als das zweite Kunststoffmaterial aufweist.

12. Verfahren nach einem der Ansprüche 1 bis 11, **dadurch gekennzeichnet, dass** das zweite Kunststoffmaterial Polypropylen und das erste Kunststoffmaterial Polyethylen hoher Dichte sind.

## Claims

1. A method for producing a first measuring cap (1) from a first plastics material, the method being based on a method for producing a second measuring cap from a second plastics material that is different from the first plastics material, the first measuring cap (1) and the second measuring cap each having a measuring cup (10) with a base (11) and a side wall (12) as well as a skirt (30) which is attached to the side wall (12) on the outside and, together with the side wall (12), delimits a circumferential annular space (31) with an internal thread (32) located therein, and the first measuring cap (1) and the second measuring cap each being produced in an injection mold (3) using an injection molding process, **characterized in that** for the production of the first measuring cap (1), the injection mold (3) of the second measuring cap is used, so that the first measuring cap (1) and the second measuring cap have an identical shape, the injection mold (3) having an ejector plunger (51) which rests against the base (11) of the measuring cup (10) and presses against this base (11) when the measuring cap (1) is ejected from the injection mold (3) and which has an ejector ring (56) which rests against an outer edge (36) of the skirt (30) and presses against the outer edge (36) during ejection.

2. The method according to claim 1, **characterized in that** an ejection direction and an ejection speed of the ejector ring (56) correspond to an ejection direction and an ejection speed of the ejector plunger (51).

3. The method according to one of claims 1 to 2, **characterized in that** the injection mold (3) has means through which the internal thread (32) of the measuring cap (1) is unscrewed from a shaping external thread of the injection mold.

4. The method according to one of claims 1 to 3, **characterized in that** the ejector plunger (51) presses against the entire base (11) of the measuring cup (10).

5. The method according to one of claims 1 to 4, **characterized in that** an inner core (52) is provided for forming an inside of the measuring cup (10), the ejector plunger (51) being moved relative to the inner core (52) when the measuring cap (1) is ejected.

6. The method according to claim 5, **characterized in that** the inner core (52) has an undercut which leads to a frusto-conical portion (16) of the side wall (12) of the measuring cup (10).

7. The method according to claim 5 or 6, **characterized in that** the ejector plunger (51) has a plunger shank (53) and an end plunger plate (54) of which the area is larger than the area of an outer cross section of the plunger shank (53).

8. The method according to one of claims 1 to 7, **characterized in that** the first plastics material is, at least in portions, a recyclate from plastics collections at the post-consumer.

9. The method according to claim 8, **characterized in that** the first plastics material is, at least in portions, a recyclate from plastics collections at the post-consumer and from industrial waste.

10. The method according to one of claims 1 to 9, **characterized in that** the first plastics material has a higher impact toughness than the second plastics material.

11. The method according to one of claims 1 to 10, **characterized in that** the first plastics material has a lower tensile strength than the second plastics material.

12. The method according to one of claims 1 to 11, **characterized in that** the second plastics material is polypropylene and the first plastics material is high density polyethylene.

## Revendications

1. Procédé de fabrication d'un premier bouchon doseur (1) à partir d'un premier matériau plastique, dans lequel le procédé est basé sur un procédé de fabrication d'un second bouchon doseur à partir d'un second matériau plastique, lequel diffère du premier matériau plastique, dans lequel le premier bouchon doseur (1) et le second bouchon doseur comportent respectivement un gobelet doseur (10) comportant un fond (11) et une paroi latérale (12) ainsi qu'une jupe (30), laquelle repose à l'extérieur sur la paroi latérale (12) et délimite, avec la paroi latérale (12), un espace annulaire circonférentiel (31) comportant un filetage interne (32) se trouvant dans celui-ci, et dans lequel le premier bouchon doseur (1) et le second bouchon doseur sont respectivement fabriqués dans un moule de moulage par injection (3) selon un procédé de moulage par injection, **caractérisé en ce que**, pour la fabrication du premier bouchon doseur (1), le moule de moulage par injection (3) du second bouchon doseur est utilisé de telle sorte que le premier bouchon doseur (1) et le second bouchon doseur présentent une forme identique, dans lequel le moule de moulage par injection (3) comporte un poinçon d'éjection (51), lequel vient en appui contre le fond (11) du gobelet doseur (10) et, lors de l'éjection du bouchon doseur (1) du moule de moulage par injection (3), fait pression contre ledit fond (11), ainsi que comporte un verre d'éjection (56), lequel vient en appui contre un bord extérieur (36) de la jupe (30) et, lors de l'éjection, fait pression contre le bord externe (36).

2. Procédé selon la revendication 1, **caractérisé en ce qu'**une direction d'éjection et une vitesse d'éjection du verre d'éjection (56) correspondent à une direction d'éjection et à une vitesse d'éjection du poinçon d'éjection (51).

3. Procédé selon l'une des revendications 1 à 2, **caractérisé en ce que** le moule de moulage par injection (3) comporte des moyens au moyen desquels le filetage interne (32) du bouchon doseur (1) est dévissé d'un filetage externe de mise en forme du moule de moulage par injection.

4. Procédé selon l'une quelconque des revendications 1 à 3, **caractérisé en ce que** le poinçon d'éjection (51) fait pression contre tout le fond (11) du gobelet doseur (10).

5. Procédé selon l'une quelconque des revendications 1 à 4, **caractérisé en ce qu'**un noyau interne (52) est fourni pour la formation d'une face interne du gobelet doseur (10), dans lequel, lors de l'éjection du bouchon doseur (1), le poinçon d'éjection (51) se déplace par rapport au noyau interne (52).

6. Procédé selon la revendication 5, **caractérisé en ce que** le noyau interne (52) comporte une contre-dépouille menant à une section (16) tronconique de la paroi latérale (12) du gobelet doseur (10).

7. Procédé selon la revendication 5 ou 6, **caractérisé en ce que** le poinçon d'éjection (51) comporte une tige de poinçon (53) et une plaque de poinçon (54) côté extrémité, dont la surface est supérieure à la surface d'une section transversale extérieure de la tige de poinçon (53).

8. Procédé selon l'une quelconque des revendications 1 à 7, **caractérisé en ce que** le premier matériau plastique est au moins proportionnellement une matière recyclée provenant de collectes de matériaux plastiques chez le consommateur final.

9. Procédé selon la revendication 8, **caractérisé en ce que** le premier matériau plastique est au moins proportionnellement une matière recyclée provenant de collectes de matériaux plastiques chez le consommateur final et de déchets industriels.

10. Procédé selon l'une quelconque des revendications 1 à 9, **caractérisé en ce que** le premier matériau plastique présente une résistance aux chocs supérieure à la résistance du second matériau plastique.

11. Procédé selon l'une quelconque des revendications 1 à 10, **caractérisé en ce que** le premier matériau plastique présente une résistance à la traction inférieure à la résistance du second matériau plastique.

12. Procédé selon l'une quelconque des revendications 1 à 11, **caractérisé en ce que** le second matériau plastique est du polypropylène et le premier matériau plastique est du polyéthylène haute densité.
